# FASCICULE DE BREVET EUROPEEN

(11) **EP 2 270 900 B1**
(45) Date de publication et mention de la délivrance du brevet: **29.08.2012**
(21) Numéro de dépôt: 10354030.8
(22) Date de dépôt: 15.06.2010
(51) Int. Cl.: H01M 4/04, H01M 4/38, H01M 10/04, H01M 10/052, H01M 4/505, H01M 4/525, H01M 4/485, H01M 4/587, H01M 4/1395, H01M 4/133, H01M 4/131, H01M 10/0562, H01M 4/134

(54) **Microbatterie lithium-ion non équilibrée**
Unausgeglichene Lithium-Ionen-Mikrobatterie
Unbalanced lithium-ion microbattery

(30) Priorité: 29.06.2009 FR 0903159
(43) Date de publication de la demande: 05.01.2011
(73) Titulaire: Commissariat à l'Énergie Atomique et aux Énergies Alternatives, 75015 Paris (FR)
(72) Inventeur: Oukassi, Sami, 38120 Saint-Egrève (FR); Le Cras, Frédéric, 38470 Vinay (FR); Martin, Steve, 38160 Saint-Sauveur (FR); Salot, Raphaël, 38250 Lans-en-Vercors (FR)
(74) Mandataire: de Jong, Jean Jacques

(56) Documents cités:
- EP-A1- 2 071 657
- WO-A1-00/60689
- JP-A- 2004 127 743
- US-A1- 2007 015 060

## Description

### Domaine technique de l'invention

L'invention concerne une microbatterie lithium-ion comprenant une électrode positive ayant une capacité de stockage C₁ et une première épaisseur dans un premier matériau d'insertion du lithium, et une électrode négative ayant une capacité de stockage C₂ et une seconde épaisseur dans un second matériau d'insertion du lithium différent du premier matériau.

### État de la technique

Les microbatteries au lithium en couches minces sont généralement constituées de deux électrodes (positive et négative) séparées par un électrolyte. Une telle microbatterie comprend, de plus, des collecteurs de courant métalliques, en platine ou tungstène par exemple. Toutes les couches de la microbatterie sont sous la forme de films minces obtenus par PVD (« Physical Vapor Deposition ») ou CVD (« Chemical Vapor Deposition »). L'épaisseur totale de l'empilement avec les couches d'encapsulation est de l'ordre de 15µ/m.

L'électrode positive est généralement un matériau d'insertion du lithium. Certains matériaux d'insertion, les oxydes de métaux lithiés par exemple (LiCoO₂, LiNiO₂, LiMn₂O₄...), nécessitent un recuit thermique afin d'augmenter la cristallisation des films et leur capacité d'insertion des ions Li⁺. D'autres matériaux, amorphes, ne requièrent pas un tel traitement et bénéficient déjà d'un taux d'insertion élevé, notamment l'oxysulfure de titane appelé TiOS. L'électrolyte est un isolant électrique avec une forte conductivité ionique tel que le LiPON. Il existe plusieurs catégories de microbatterie mettant en jeu les ions Li⁺, selon la nature de l'électrode négative.

Les microbatteries comportant une électrode négative en lithium métallique constituent une première catégorie, dite lithium-métal. Le principe de fonctionnement repose sur l'insertion-désinsertion (ou intercalation-désintercalation) d'un ion Li⁺ dans l'électrode positive. Ce processus d'insertion-désinsertion occasionne généralement des pertes d'ions Li⁺. Elles sont, entre autres, dues à l'insertion irréversible d'ions Li⁺ dans l'électrode positive ou à une oxydation, par exemple, à cause d'une encapsulation défaillante. Les ions Li⁺ perdus ne participent plus aux réactions électrochimiques. Dans les microbatteries lithium-métal, le lithium métallique, généralement en excès, permet un apport supplémentaire d'ions Li⁺ qui compense ces pertes. Ainsi, les capacités de charge et de décharge restent à un niveau stable au fil des cycles de charge/décharge.

Ce type de microbatterie présente les meilleures propriétés électrochimiques, notamment en termes de potentiel et de stabilité de la capacité de charge et de décharge. Néanmoins, les microbatteries lithium-métal sont difficiles à fabriquer. En effet, la présence de lithium métallique rend inappropriées les techniques de microfabrication usuelles et certaines étapes de mise en boîtier, notamment le brasage par soudure à vague (« solder reflow process » en anglais) qui s'effectue à une température supérieure à la température de fusion du lithium métallique.

Contrairement à l'électrode négative d'une microbatterie lithium-métal, l'électrode négative d'une microbatterie lithium-ion (ou Li-ion) comporte un matériau d'intercalation, ou d'insertion, et du lithium. Les cations Li⁺ font des aller-retours entre les électrodes négative et positive à chaque charge et décharge de la microbatterie. Le matériau de l'électrode négative est choisi par exemple parmi les oxydes de matériaux d'insertion comme LiNiO₂, SnO, l'oxyde d'indium et de plomb, ou les cristallogènes (Si, Ge, C...). Cette catégorie de microbatterie permet l'utilisation des techniques de microfabrication usuelles, mais présente généralement de moins bonnes performances électrochimiques en cyclage.

L'article « Characterization of tin oxyde/LiMn2O2thin-film cell » (Journal of Power Sources 88, pp. 250-304, 254, 2000) décrit un exemple de microbatterie lithium-ion, avec des électrodes positive et négative, respectivement en LiMn₂O₄ et oxyde d'étain (SnO₂). L'article met en évidence la perte de capacité d'une telle microbatterie, en absence d'un excès de lithium, suite à une irréversibilité d'insertion lors du premier cycle.

Ainsi, les microbatteries lithium-ion nécessitent souvent un équilibrage des matériaux d'anode et de cathode pour limiter cette perte de capacité, ce qui peut s'avérer délicat. Par équilibrage, on entend avoir la même capacité de stockage, ou capacité d'insertion, des ions Li⁺ dans chaque électrode.

L'article « "Lithium-Free" Thin Film Battery With In Situ Plated Li Anode» (Journal of The Electrochemical Society, 147(2), pp. 517-523, 2000) décrit un troisième type de microbatterie, couramment appelée « lithium-free ». Cette microbatterie comporte un collecteur métallique de courant en tant qu'électrode négative. Pendant une première charge, les ions Li⁺ migrent depuis l'électrode positive et sont bloqués par le collecteur de courant, par exemple en cuivre. Les ions Li⁺ forment, par électrodéposition, une couche de lithium métallique sur le collecteur de courant. Ensuite, la batterie se comporte de la même manière qu'une batterie lithium-métal, avec une faible chute de la capacité lors du premier cycle.

Néanmoins, les microbatteries « lithium-free » présentent une baisse des performances électrochimiques en cyclage. En effet, l'électrodéposition à chaque cycle du lithium sur le collecteur, créant de nouveaux volumes, favorise les contraintes et la fatigue des couches de l'empilement. Des dendrites fragilisantes et traversantes de lithium se forment dans l'électrolyte, menant à des courts-circuits dans la microbatterie.

Le document WO00/60689 décrit une microbatterie « lithium-free ». L'anode en lithium métallique est formée « in-situ » par électrodéposition sur un collecteur de courant en carbone saturé en lithium, lors d'une charge d'activation de la microbatterie.

Dans ce type de microbatterie, le lithium inséré dans le collecteur et le lithium électrodéposé sur le collecteur participent aux cycles de charge et décharge suivants. Ces insertions-désinsertions répétées provoquent une fatigue mécanique du matériau constituant le collecteur de courant. Le matériau se détériore entraînant une diminution progressive des performances de la microbatterie, notamment de sa capacité de charge et de décharge.

### Objet de l'invention

L'invention a pour but un procédé de fonctionnement d'une microbatterie lithium-ion permettant d'obtenir d'excellentes performances électrochimiques, comparables à celles des microbatteries lithium-métal, tout en étant stable chimiquement.

Selon l'invention, ce but est atteint par le fait que, une microbatterie lithium-ion comprenant :
- une électrode positive ayant une capacité de stockage C₁ des ions lithium et une première épaisseur dans un premier matériau d'insertion du lithium,
- un électrolyte, et
- une électrode négative ayant une capacité de stockage C₂ des ions lithium et une seconde épaisseur dans un second matériau d'insertion du lithium différent du premier matériau, les première et seconde épaisseurs étant choisies de manière à ce que le rapport C₁/C₂ soit supérieur ou égal à 10 et inférieur ou égal à 1000,
le procédé de fonctionnement de la microbatterie comprend les étapes suivantes :
- une première charge de la microbatterie pour transférer, de l'électrode positive vers l'électrode négative, une première quantité de lithium jusqu'à saturation de l'électrode négative et une seconde quantité de lithium jusqu'à formation d'une couche de lithium métallique entre l'électrolyte et l'électrode négative saturée en lithium,
- des décharges et charges ultérieures par transfert entre l'électrode positive et l'électrode négative uniquement de la seconde quantité de lithium déposée sous forme de la couche de lithium métallique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent respectivement le potentiel V+ de l'électrode positive en Li_{X}TiOS et le potentiel V- de l'électrode négative en Si en fonction de la capacité C d'une microbatterie fonctionnant selon l'art antérieur.
- les figures 3 et 4 représentent respectivement le potentiel V+ de l'électrode positive en Li_{X}TiOS et le potentiel V- de l'électrode négative en Si en fonction de la capacité C d'une microbatterie selon l'invention.
- les figures 5 à 7 représentent schématiquement des étapes d'un procédé de réalisation d'une batterie au lithium selon l'invention

### Description de modes particuliers de réalisation

La microbatterie comporte une électrode positive d'une épaisseur t₁ dans un premier matériau d'insertion du lithium et une électrode négative d'une épaisseur t₂ dans un second matériau d'insertion du lithium, différent du premier matériau.

Par ailleurs, les électrodes sont fortement déséquilibrées en terme de capacité de stockage des ions Li⁺, c'est-à-dire que l'électrode négative peut stocker les ions Li⁺ au sein de sa structure en quantité nettement inférieure par rapport à l'électrode positive. Ainsi, la capacité C₁ de stockage d'ions Li⁺ de l'électrode positive est supérieure à la capacité de stockage C₂de l'électrode négative.

Au cours de la première charge d'une telle microbatterie, les ions Li⁺ migrent de l'électrode positive vers l'électrode négative pour s'y insérer jusqu'à la saturation. Cette saturation apparaît rapidement, compte tenu de la faible capacité d'insertion d'ions Li⁺ de l'électrode négative. Lorsque la charge initiale se poursuit, les ions Li⁺ ne peuvent plus s'insérer dans le matériau constituant l'électrode négative et donc forment un dépôt de lithium métallique à la surface de l'électrode négative, du côté de l'électrolyte. Lors des cycles suivants, la couche formée par ce dépôt de lithium métallique se comporte en tant que nouvelle électrode négative de la microbatterie.

Dans un exemple de réalisation, l'électrode positive est en oxysulfure de titane lithié (Li_{X}TiOS). L'électrolyte est classiquement de l'oxynitrure de phosphate lithié (LiPON). L'électrode négative comporte initialement une couche de silicium. Le tableau ci-dessous donne les capacités de stockage normalisées par rapport à la surface (en cm²) et à l'épaisseur (en µm) des électrodes dans les deux matériaux cités, ainsi que les fenêtres de potentiel associées :

| Matériau d'insertion | Fenêtre de potentiel (V) | Capacité normalisée (µAh.cm⁻².µm⁻¹) |
|---|---|---|
| Li_{X}TiOS | 1-3 | 80 |
| Si | 0-1 | 400 |

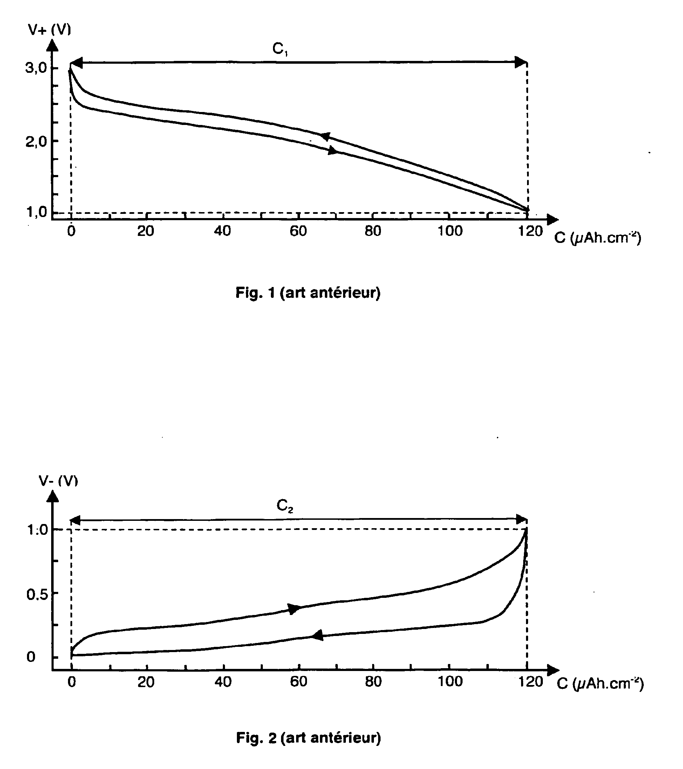

Comme illustré sur les figures 1 et 2, dans une configuration de microbatterie lithium-ion classique, les électrodes sont équilibrées, c'est-à-dire que leurs capacités de stockage d'ions Li⁺ sont sensiblement égales (C₁ = C₂). Par exemple, pour une microbatterie d'une capacité de l'ordre de 120µAh.cm⁻², l'électrode positive en Li_{X}TiOS et l'électrode négative en Si présenteraient respectivement une épaisseur de 1,5µm et de 0,3µm. Le produit de la capacité normalisée et de l'épaisseur pour chaque électrode correspond à la capacité de stockage des ions Li⁺ (C₁ ou C₂) et donc à la capacité de la batterie. Dans ce cas, on obtient C₁=C₂=120µAh.cm⁻².

Pendant une charge complète d'une telle microbatterie, les électrodes étant équilibrées, tous les ions Li⁺ (quantité X) migrent de l'électrode positive en Li_{X}TiOS vers l'électrode négative en Si pour s'y insérer :

Li_{X}TiOS → Li_{X}Si

Le potentiel V+ de l'électrode positive, représenté sur la figure 1, augmente de 1 V à 3V par rapport au potentiel de référence du couple Li⁺/Li. Inversement, le potentiel V- de l'électrode négative, représenté sur la figure 2, diminue de 1 V à 0V, par rapport au potentiel de référence Li⁺/Li, au fur et à mesure que les ions Li⁺s'y insèrent.

Pendant la décharge de la microbatterie, les X ions Li⁺ migrent dans le sens inverse de la charge :

Li_{X}Si → Li_{X}TiOS

Le potentiel de l'électrode positive (Fig.1) diminue alors de 3V à 1 V par rapport au potentiel de référence Li⁺/Li. Inversement, le potentiel de l'électrode négative (Fig.2) augmente de 0V à 1 V par rapport au potentiel de référence Li⁺/Li.

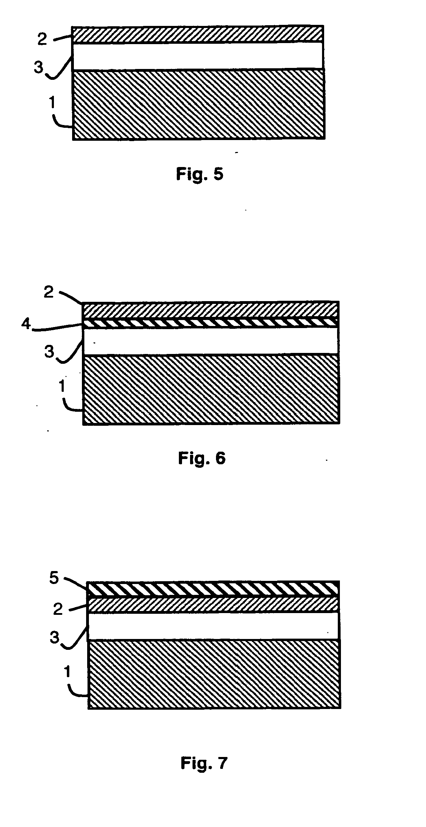

La microbatterie selon l'invention comporte initialement (avant toute charge) des électrodes positive 1 et négative 2 non équilibrées en terme de capacité de stockage, et un électrolyte 3 disposé entre les électrodes 1 et 2 (figure 5). Les épaisseurs t₁ et t₂ des électrodes sont telles que la capacité C₁ de l'électrode positive soit supérieure à la capacité C₂ de l'électrode négative, compte tenu de leurs épaisseurs respectives, de la nature des matériaux employés, c'est-à-dire de leurs capacités normalisées respectives. Ainsi, le rapport C₁/C₂ est supérieur à 1 et inférieur ou égal à 1000. Préférentiellement, le rapport C₁/C₂ est supérieur ou égal à 10 et inférieur ou égal à 100.

Avec des électrodes non équilibrées, les capacités de stockage C₁ et C₂ sont inégales. Par exemple, pour une microbatterie d'une capacité de l'ordre de 120µAh.cm⁻², l'électrode positive 1 en Li_{X}TiOS et l'électrode négative 2 en Si ont respectivement une épaisseur de 2µm et de 0,1µm. La capacité C₁ vaut alors 160µAh.cm⁻² et la capacité C₂ vaut 40µAh.cm⁻². Le rapport C₁/C₂ est donc égal à 4.

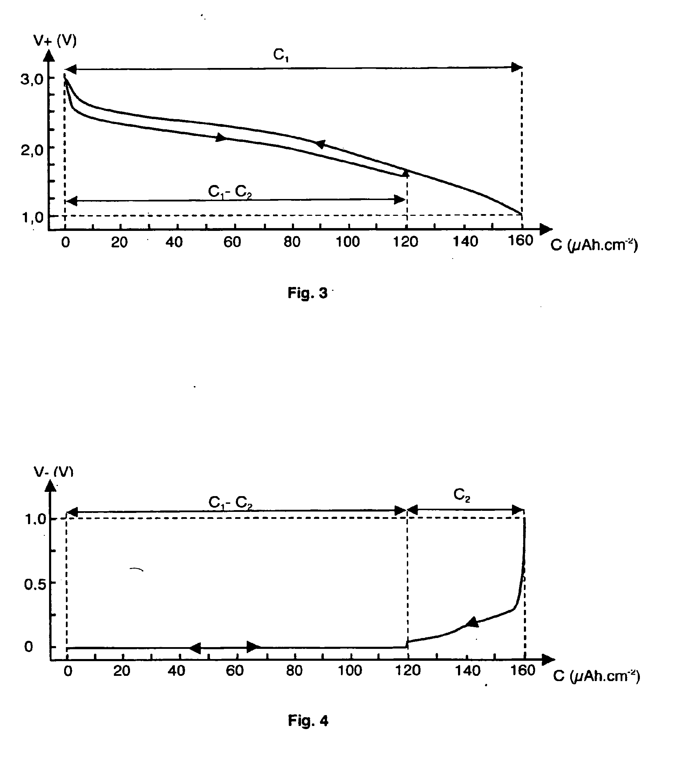

Comme illustré sur les figures 3, 4 et 6, pendant la charge d'une microbatterie non équilibrée, tous les ions Li⁺, en quantité X=X₁+X₂ équivalant à une capacité de stockage C₁=160µAh.cm⁻², migrent depuis l'électrode positive 1 en Li_{X}TiOS. Une partie, en quantité X₁ équivalant à une capacité de stockage C₂=40µAh.cm⁻², s'insère dans l'électrode négative 2 en silicium jusqu'à saturation (Li_{X1},Si). La seconde partie des ions Li⁺, en quantité X₂ équivalant à une capacité de stockageC₁-C₂=120µAh.cm⁻² forme une couche 4 de lithium métallique entre l'électrolyte 3 et l'électrode négative 2 par électrodéposition :

Li_{(X1+X2)}TiOS → Li_{X1}Si + X₂ Li

Ainsi, la quantité X₁ est nettement inférieure à X₂ compte tenu de la faible capacité de stockage de l'électrode négative. Le potentiel V+ de l'électrode positive augmente de 1 V à 3V par rapport au potentiel de référence du couple Li⁺/Li. Inversement, le potentiel V- de l'électrode négative diminue de 1 V à 0V par rapport au potentiel de référence du couple Li⁺/Li, au fur et à mesure que les ions Li⁺ s'y insèrent jusqu'à la saturation.

La charge continue jusqu'à transfert de tous les ions Li⁺ de l'électrode positive 1 à l'électrode négative 2, formant ainsi la couche 4 de lithium métallique.

Pendant la décharge de la microbatterie, seuls les ions Li⁺ qui se sont électrodéposés sous la forme d'une couche 4 de lithium métallique participent au processus et migrent dans le sens inverse :

X₂ Li → Li_{X2}TiOS

Le potentiel de l'électrode positive (Fig.3) diminue alors de 3V à 1,7V par rapport au potentiel de référence du couple Li⁺/Li. Ce potentiel ne revient pas à 1 puisque le Li_{X}TiOS ne récupère pas la quantité initiale X₁+X₂ d'ions Li⁺. De plus, le potentiel de l'électrode négative (Li_{X1}Si) n'évolue pas puisque le lithium est inséré définitivement dans le silicium. II se maintient donc à 0 (Fig.4).

Selon ce mode de fonctionnement, le lithium contenu dans l'électrode négative en Li_{X1}Si n'est jamais désinséré lors d'une décharge, contrairement aux microbatteries « lithium-free » de l'art antérieur. Après avoir été chargée une première fois, la microbatterie se comporte donc uniquement comme une microbatterie Li-métal et ne revient pas dans son état initial. Ainsi, la fatigue mécanique du silicium peut être évitée.

La fin de décharge de la microbatterie peut être contrôlée par la tension aux bornes de la microbatterie. Dès que la tension atteint une valeur limite correspondant au début de la désinsertion du lithium de l'électrode négative, la décharge est interrompue. Ainsi, le transfert du lithium est limité à la couche de lithium métallique. Cette valeur seuil est prédéterminée en fonction de la nature des électrodes, en particulier de leurs capacités de stockage des ions lithium. Dans l'exemple des figures 3 et 4, elle vaut 1,7 V.

Dans une variante de réalisation illustrée à la figure 7, la microbatterie comporte dans un premier temps une électrode positive 1 dans un matériau initial non-lithié, par exemple TiOS. Une couche 5 de lithium métallique est ensuite déposée sur la face externe libre de l'électrode négative 2, c'est-à-dire sur la face supérieure. Cette couche 5 constitue l'apport en lithium de la microbatterie et la quantité de lithium déposée est égale à la quantité de lithium que peut stocker l'électrode positive 1. Cette quantité équivaut donc à la capacité d'insertion des ions Li⁺ de l'électrode positive en TiOS. L'électrode positive 1 et la couche 5 de lithium métallique sont ensuite mises en court-circuit. Les ions Li⁺de la couche 5 s'insèrent alors en totalité dans le matériau d'insertion (TiOS) constituant initialement l'électrode positive 1, pour former le matériau lithié de l'électrode positive (LiTiOS). La microbatterie ainsi obtenue est identique à celle de la figure 5 et est prête pour la charge initiale comme décrite précédemment.

Il est à noter que, dans l'article « Caracterization of tin oxyde/LiMn₂O₂ thin-film cell » précité, Park suggère qu'un déséquilibre entre les deux électrodes d'insertion d'une microbatterie lithium-ion est généralement néfaste pour le bon fonctionnement du dispositif.

Cependant, dans les conditions de déséquilibre énoncées ci-dessus, la microbatterie au lithium, comportant la formation de lithium métallique sur l'électrode négative saturée en lithium, présente de grandes performances électrochimiques, notamment une stabilité de la capacité au cours du cyclage. Ces performances sont dues à la présence de lithium métallique à la surface de l'électrode négative et sont comparables à celles des microbatteries lithium-métal.

La fine couche de silicium de l'électrode négative agit comme une couche d'insertion dans un premier temps, et ensuite comme une couche de germination et de croissance lors de l'électrodéposition du lithium métallique. La croissance semble ainsi avoir lieu d'une manière homogène, évitant ainsi toute formation de dendrites susceptibles d'occasionner une défaillance de la microbatterie.

De plus, l'utilisation de ce type de configuration permet de s'affranchir de toute irréversibilité d'insertion pouvant avoir lieu dans l'électrode négative. En effet, le lithium qui est inséré dans l'électrode négative au cours de la première charge ne joue aucun rôle dans les cycles de charge-décharge suivants.

Par ailleurs, la réalisation de la microbatterie permet de s'affranchir de l'étape d'équilibrage des électrodes positive et négative, étape nécessaire et souvent critique dans la réalisation de microbatteries Li-ion classiques.

La structure initiale de la microbatterie, avant la première charge formant la couche de lithium métallique, permet une fabrication à l'aide des techniques de microfabrication usuelles. En effet, les matériaux d'insertion employés (TiOS lithié et Si par exemple) sont compatibles avec ces techniques, en particulier avec les traitements thermiques au-delà de la température de fusion du lithium métallique.

Enfin, le potentiel délivré par une telle microbatterie varie de manière continue et monotone. L'intégration de la microbatterie dans un système électronique global et le contrôle de son état de charge sont alors facilités.

Les valeurs de capacités, potentiels et épaisseurs des électrodes sont donnés ci-dessus à titre d'exemple. Notamment, le matériau de l'électrode positive pourra être choisi parmi d'autres matériaux d'insertion lithiés, par exemple LiCoO₂, LiMn₂O₄, LiV₂O₅... Le matériau de l'électrode négative pourra être choisi parmi les cristallogènes Ge, SiGe, C... Les épaisseurs des électrodes peuvent varier de 100nm à 10µm pour l'électrode positive et de 5nm à 1µm pour l'électrode négative. De préférence, l'épaisseur de l'électrode positive sera comprise entre 1 et 5µm et l'épaisseur de l'électrode négative entre 10nm et 400nm.

## Revendications

1. Procédé de fonctionnement d'une microbatterie lithium-ion comprenant :
- une électrode positive (1) ayant une capacité de stockage C₁ des ions lithium et une première épaisseur (t₁) dans un premier matériau d'insertion du lithium,
- un électrolyte (3), et
- une électrode négative (2) ayant une capacité de stockage C₂ des ions lithium et une seconde épaisseur (t₂) dans un second matériau d'insertion du lithium différent du premier matériau, les première et seconde épaisseurs (t₁, t₂) étant choisies de manière à ce que le rapport C₁/C₂ soit supérieur ou égal à 10 et inférieur ou égal à 1000,
le procédé comprenant les étapes suivantes :
- une première charge de la microbatterie pour transférer, de l'électrode positive (1) vers l'électrode négative (2), une première quantité (X₁) de lithium jusqu'à saturation de l'électrode négative (2) et une seconde quantité de lithium (X₂) jusqu'à formation d'une couche (4) de lithium métallique entre l'électrolyte (3) et l'électrode négative (2) saturée en lithium,
- décharges et charges ultérieures par transfert entre l'électrode positive (1) et l'électrode négative (2) uniquement de la seconde quantité de lithium (X₂) déposée sous forme de la couche (4) de lithium métallique.

2. Procédé selon la revendication 1, **caractérisé en ce que** les décharges de la microbatterie sont interrompues lorsque la tension aux bornes de la microbatterie atteint une valeur seuil.

3. Procédé selon la revendication 1, **caractérisé en ce que**, un matériau initial de l'électrode positive (1) étant un matériau non lithié, le procédé comprend initialement une mise en court-circuit de l'électrode positive (1) et d'une couche de lithium métallique (5) disposée sur une face externe libre de l'électrode négative (2) pour former le matériau de l'électrode positive.

## Claims

1. Method for operating a lithium-ion microbattery comprising:
- a positive electrode (1) having a storage capacity C₁ of lithium ions and a first thickness (t₁) of a first lithium insertion material,
- an electrolyte (3), and
- a negative electrode (2) having a storage capacity C₂ of lithium ions and a second thickness (t₂) of a second lithium insertion material different from the first material, the first and second thicknesses (t₁, t₂) being chosen such that the ratio C₁/C₂ is greater than or equal to 10 and lower than or equal to 1000,
the method comprising the following steps:
- a first charge of the microbattery to transfer, from the positive electrode (1) to the negative electrode (2), a first quantity (X₁) of lithium until saturation of the negative electrode (2) and a second quantity of lithium (X₂) until a metallic lithium layer (4) is formed between the electrolyte (3) and the lithium-saturated negative electrode (2),
- subsequent discharges and charges by transfer between the positive electrode (1) and the negative electrode (2) only of the second quantity of lithium (X₂) deposited in the form of the metallic lithium layer (4).

2. Method according to claim 1, **characterized in that** discharges of the microbattery are interrupted when the voltage at the terminals of the microbattery reaches a threshold value.

3. Method according to claim 1, **characterized in that**, an initial material of the positive electrode (1) being a non-lithiated material, the method initially comprises short-circuiting of the positive electrode (1) and of a metallic lithium layer (5) arranged on a free external surface of the negative electrode (2) to form the material of the positive electrode.

## Patentansprüche

1. Verfahren zum Betrieb einer Lithium-Ionen-Mikrobatterie umfassend:
- eine positive Elektrode (1), die eine Kapazität C₁ zum Speichern der Lithium-Ionen und eine erste Dicke (t₁) aus einem ersten Material zur Einlagerung des Lithiums aufweist,
- einen Elektrolyten (3) und
- eine negative Elektrode (2), die eine Kapazität C₂ zum Speichern der Lithium-Ionen und eine zweite Dicke (t₂) aus einem sich von dem ersten Material unterscheidenden zweiten Material zur Einlagerung des Lithiums aufweist, wobei die erste und die zweite Dicke (t₁, t₂) derart gewählt sind, dass das Verhältnis C₁/C₂ größer oder gleich 10 und kleiner oder gleich 1000 ist,
wobei das Verfahren die folgenden Schritte umfasst:
- ein erstes Laden der Mikrobatterie, um von der positiven Elektrode (1) zur negativen Elektrode (2) eine erste Lithium-Menge (X₁) bis zur Sättigung der negativen Elektrode (2) und eine zweite Lithium-Menge (X₂) bis zur Bildung einer Schicht (4) aus metallischem Lithium zwischen dem Elektrolyten (3) und der Lithium-gesättigten negativen Elektrode (2) zu übertragen,
- nachträgliche Entladungen und Ladungen durch Übertragen - zwischen der positiven Elektrode (1) und der negativen Elektrode (2)-lediglich der in Form der Schicht (4) aus metallischem Lithium abgeschiedenen zweiten Lithium-Menge (X₂).

2. Verfahren nach Anspruch 1, **dadurch gekennzeichnet, dass** die Entladungen der Mikrobatterie unterbrochen werden, wenn die Spannung an den Anschlüssen der Mikrobatterie einen Schwellenwert erreicht.

3. Verfahren nach Anspruch 1, **dadurch gekennzeichnet, dass** wenn ein Ausgangsmaterial der positiven Elektrode (1) ein nicht-lithiiertes Material ist, das Verfahren anfangs ein Kurzschließen der positiven Elektrode (1) und einer Schicht aus metallischem Lithium (5), die auf einer freien Außenseite der negativen Elektrode (2) angeordnet ist, umfasst, um das Material der positiven Elektrode zu bilden.
